# EUROPÄISCHE PATENTSCHRIFT

(11) **EP 1 801 005 B1**
(45) Veröffentlichungstag und Bekanntmachung des Hinweises auf die Patenterteilung: **12.11.2008**
(21) Anmeldenummer: 06026284.7
(22) Anmeldetag: 19.12.2006
(51) Int. Cl.: B62K 25/02

(54) **Schnellspanner, insbesondere für Fahrräder**
Quick-release mechanism, especially for bicycles
Dispositif de blocage rapide, en particulier pour bicyclettes

(30) Priorität: 24.12.2005 DE 102005062702
(43) Veröffentlichungstag der Anmeldung: 27.06.2007
(73) Patentinhaber: DT Swiss AG, 2500 Biel (CH)
(72) Erfinder: Spahr, Stephan, 2543 Lengnau (CH)
(74) Vertreter: Schütte, Hartmut

(56) Entgegenhaltungen:
- EP-A2- 1 000 847
- BE-A- 488 926
- US-A- 4 079 958
- US-A- 5 961 186
- US-A- 6 004 064

## Beschreibung

Die Erfindung betrifft einen Schnellspanner, insbesondere für Fahrräder. Insbesondere im sportlichen und semiprofessionellen, sowie dem professionellen Bereich des Radsports werden Schnellspanner verwendet, um Komponenten schnell ein- und ausbauen zu können. Obwohl die Erfindung im Folgenden mit Bezug auf die Räder von Fahrrädern beschrieben wird, so ist ein Einsatz auch zur Befestigung anderer Komponenten möglich, wie z.B. zur Befestigung des Sattels.

Im Bereich des hochqualitativen Radsports spielt die Belastbarkeit und das Gewicht eine entscheidende Rolle. Die Benutzer legen Wert auf hochwertige Komponenten, bei denen jedes Gramm Gewicht zählt. Gleichzeitig ist die Sicherheit ein wichtiges Thema. So muss ein Schnellspanner das Rad zuverlässig sichern. Gleichzeitig sollte eine einfache und schnelle Kontrolle des Spannungszustandes möglich sein.

Im Stand der Technik, wie zum Beispiel im Dokument EP-A-1 000 847 gezeigt, sind verschiedene Schnellspanner für Fahrräder bekannt geworden. Bei den heute bekannten Schnellspannsystemen wird die Klemmkraft durch das Umlegen eines Exzenters aufgebracht, nachdem die Klemmlänge mittels einer Mutter und eines Anschlags voreingestellt wird.

Nachteilig an dem bekannten System ist, dass mit der Spannmutter, zuerst die Klemmlänge eingestellt werden muss. Die Klemmlänge und somit die Klemmkraft kann aber nur durch Umlegen des Exzenters überprüft werden. So sind im Normalfall mehrere Zyklen erforderlich, bis die Klemmlänge und damit die Klemmkraft passen.

Demgegenüber ist es Aufgabe der Erfindung, einen Schnellspanner für Fahrräder zur Verfügung zu stellen, welcher einfacher zu bedienen ist.

Dokument BE-A-488 926 zeigt einen Schnellspanner gemäß Oberbegriff des Anspruchs 1.

Diese Aufgabe wird erfindungsgemäß durch einen Schnellspanner gemäß Anspruch 1 und mit einem Rad mit den Merkmalen des Anspruchs 15 gelöst. Bevorzugte Weiterbildungen und Ausgestaltungen sind Gegenstand der Unteransprüche.

Der erfindungsgemäße Schnellspanner ist insbesondere für Fahrräder vorgesehen und dient insbesondere zur Befestigung der Laufräder. Der Schnellspanner umfasst eine sich in axialer Richtung erstreckende Zugstange, ein Endstück an einem ersten Ende der Zugstange, ein Spannstück an dem zweiten Ende der Zugstange und eine Spanneinrichtung zum Spannen des Spannstücks. Die Spanneinrichtung umfasst einen Hebel zum Aufbringen der Spannkraft und eine Spannhülse. Die Spannhülse ist mit einem Übertragungsabschnitt zum Übertragen der Spannkraft auf einen Eingriffsabschnitt des Spannstücks versehen. Dabei ist der Hebel gegenüber dem Spannstück in der axialen Richtung der Zugstange beweglich angeordnet und entgegen der Vorspannung einer Vorspannfeder in der axialen Richtung der Zugstange nach außen von einer Eingriffsstellung in eine Drehposition bewegbar, in der eine Winkelstellung des Hebels unabhängig von dem Spannungszustand einstellbar ist.

In der Drehposition ist eine Winkelstellung des Hebels veränderbar, während der Schnellspanner gespannt bleibt. Ein Lösen der Klemmkraft zum Ändern der Winkelstellung ist nicht nötig.

Die Erfindung hat erhebliche Vorteile. Erfindungsgemäß wird ein einfacher Aufbau und eine einfache Bedienung ermöglicht. Die Klemmkraft des Schnellspanners wird durch das Spannstück bestimmt; der Hebel für die Übertragung der Spannkraft ist unabhängig davon in eine bestimmte, insbesondere frei wählbare Winkelposition einstellbar. Die Klemmkraft ist unabhängig von der Vorspannfeder. So kann der Hebel bzw. Spannhebel in eine gewünschte Winkelposition z.B. parallel zur Gabel oder den Ausfallenden oder zu den Sitzstreben ausgerichtet werden, ohne dass dabei ein Lösen und erneutes Spannen nötig ist. Die auf den Spannhebel aufgebrachte Spannkraft wird in eine zwischen Spannstück und Endstück wirkende Klemmkraft umgesetzt, die das Rad in dem Rahmen bzw. der Gabel hält.

Im Stand der Technik hingegen muss der Exzenter umgelegt und damit die Klemmung des Laufrads wieder gelöst werden, um den Exzenter in eine gewünschte Winkelposition zu bringen. Dann wird der Exzenter entsprechend verdreht und anschließend wieder gespannt.

In einer bevorzugten Weiterbildung ist der Eingriffsabschnitt als Innenverzahnung ausgeführt und wirkt insbesondere mit einem als Außenverzahnung ausgeführten Übertragungsabschnitt zusammen. Die beiden Verzahnungen erstrecken sich insbesondere über den ganzen Umfang und erlauben so eine effektive Kraftübertragung beim Spannen, die nicht nur punktuell, sondern über den gesamten Umfang oder doch den wesentlichen Teil des Umfangs wirkt. Durch die große Fläche zur Kraftübertragung kann eine dauerhafte Funktion gewährleistet werden. Es kann eine hohe Klemmkraft zuverlässig und reproduzierbar eingestellt werden, da sich beim Spannen die Außen- und Innenverzahnungen zur Kraftübertragung über einer großen Kontaktfläche im Eingriff befinden.

Der Eingriffsabschnitt und der Übertragungsabschnitt können auch als sonstige Profilkörper ausgebildet sein, die einen Formschluss ermöglichen und axial in Richtung der Zugstange gegeneinander verschiebbar sind.

Die axiale Verstellung in Richtung der Zugstange zwischen Eingriffsstellung und Drehposition hat den ganz erheblichen Vorteil, dass der Eingriffsabschnitt und der Übertragungsabschnitt voll umfänglich miteinander in Eingriff stehen können und so ein hohes Drehmoment übertragbar ist, ohne dass die in Eingriff stehenden Abschnitte verschleißen oder überlastet werden. Die sich erfindungsgemäß über den gesamten Umfang, z.B. jeweils kreisförmig um die Zugstange herum erstreckenden Eingriffs- und Übertragungsabschnitte weisen relativ große Flächen auf, so dass sie eine dünnere Konstruktion der einzelnen Teile bei gleichzeitig höherer Belastbarkeit ermöglichen. Schnellspanner aus dem Stand der Technik mit einer punktuellen Belastung der kraftübertragenden Teile sind hingegen einer erheblich höheren Belastung ausgesetzt.

In bevorzugten Weiterbildungen weist das Spannstück ein Innengewinde auf, welches mit einem Außengewinde der Zugstange zusammenwirkt. Dadurch wird eine flexible Einstellung der Klemmkraft ermöglicht.

Insbesondere weist das Endstück ein Innengewinde auf, welches mit einem Außengewinde der Zugstange zusammenwirkt. Auf der einen Seite wird dann das Endstück aufgeschraubt und auf der anderen Seite das Spannstück.

Das Endstück kann auch einstückig mit der Zugstange vorgesehen sein. Dann ist dort ein Gewinde nicht nötig. Die Zugstange des Schnellspanners kann mit dem freien Ende auf ein Rad aufgeschoben werden. Darauf wird nach dem Durchschieben dann das Spannstück aufgeschraubt.

Vorteilhafterweise umfasst die Spanneinrichtung eine Sicherungseinrichtung, um die Spannhülse an dem Spannstück axial bewegbar und verliersicher aufzunehmen. Dadurch wird eine zuverlässige Funktion gewährleistet. Der Hebel kann in Eingriff mit dem Spannstück und außer Eingriff damit gebracht werden, bleibt aber an der Spanneinrichtung sicher aufgenommen.

In bevorzugten Weiterbildungen ist zwischen der Sicherungseinrichtung und dem Endstück die Vorspannfeder angeordnet.

Die Sicherungseinrichtung weist insbesondere ein Außengewinde auf, welches mit einem Innengewinde des Spannstücks zusammenwirkt. Die Sicherungseinrichtung kann eine Schraube mit Schraubenkopf umfassen , so dass der Schraubenkopf der Sicherungseinrichtung die Vorspannfeder aufnimmt bzw. abstützt. Die insbesondere als Spiralfeder ausgeführte Vorspannfeder stützt sich auf der einen Seite an dem radial vergrößerten Kopf der Sicherungseinrichtung ab und auf der andere Seite vorzugsweise an einem radial nach innen abstehenden Absatz in der Spannhülse. So wird die Spannhülse in Richtung auf das Spannstück hin vorbelastet. Vorzugsweise umfasst die Sicherungseinrichtung eine Schraube mit einem daran gehaltenen Kopf oder Schraubenkopf und einen radial nach innen abstehenden Absatz in der Spannhülse, zwischen denen die Vorspannfeder angeordnet ist.

Die Spannhülse umgreift in besonders bevorzugten Weiterbildungen das Spannstück, so dass das Spannstück radial von der Spannhülse umgeben ist.

Bei konventionellen Schnellspannern kann insbesondere im Zusammenhang mit der Verwendung von Scheibenbremsen die Temperaturerhöhung beim Bremsen problematisch sein, wenn nämlich Kunststoffteile im oder unmittelbar neben dem Kraftfluss liegen. Die großen Temperaturschwankungen und Wärmeströme können bei herkömmlichen Systemen eine Veränderung der Klemmkraft verursachen was im schlimmsten Fall zum Versagen des Systems führen kann.

Bei dem erfindungsgemäßen System werden hingegen vorzugsweise für die im Kraftfluss liegenden Komponenten, die die Klemmkraft im Betrieb aufrecht erhalten, Metallteile eingesetzt. Dadurch wird die Sicherheit erhöht.

In allen Ausgestaltungen ist es bevorzugt, dass zwischen dem Eingriffsabschnitt der Spanneinrichtung und dem Spannstück ein axialer Ringspalt vorliegt. Ein solcher Ringspalt bietet erhebliche Vorteile. Er bewirkt eine thermische Entkopplung von Spannhebel und Spannstück. Der Wärmefluss in den Spannhebel wird unterbrochen oder wenigstens reduziert. Wenn z.B. eine Scheibenbremse verwendet wird, können die auftretenden hohen Temperaturen sich bei konventionellen Systemen auf den Schnellspanner übertragen. Das kann bei konventionellen Schnellspannern durch thermische Ausdehnung von Kunststoffteilen zu einer Veränderung der Klemmkraft führen. Hier nicht, da die die Klemmung erhaltenden Bauteile aus Metall sind.

Ein weiterer Vorteil des Ringspalts ist, dass durch vorbei streichende Luft sowohl das Spannstück als auch der Spannhebel mit Spannhülse gekühlt wird. Dadurch weist der Spannhebel eine niedrigere Temperatur auf als in den aus dem Stand der Technik bekannten Systemen. Durch den Luftspalt zwischen der Spannhülse der Spanneinrichtung und dem Spannstück wird der Wärmefluss gehemmt, der eine Erwärmung des Spannhebels ergeben würde. Diese Erwärmung des Spannhebels ergäbe zwar bei dem erfindungsgemäßen System keine Veränderung der Klemmlänge und/oder der Klemmkraft, könnte aber die Betätigung von Hand erschweren und das Tragen von Handschuhen zur Betätigung erforderlich machen, um Verbrennungen vorzubeugen.

Der Spannhebel ist mit der Spannhülse fest verbunden und kann einstückig gefertigt sein.

In allen Ausgestaltungen ist es bevorzugt, dass der Hebel wenigstens teilweise aus einem Kunststoff besteht, während die weiteren Komponenten, wie Zugstange, Endstück und Spannstück vorzugsweise aus einem Metall bestehen. Vorzugsweise besteht der Spannhebel bzw. der Hebel des Schnellspanners wenigstens teilweise aus einem Faserverbundwerkstoff. Dadurch kann eine Gewichtsreduktion erreicht werden, die im hochqualitativen Bereich ein wichtige Rolle spielt. Bei einer Ausgestaltung besteht einzig der sich nicht im Kraftfluss der Klemmkraft befindliche Schnellspannhebel vorzugsweise aus Kunststoff.

Der Spannhebel kann auch aus Metall, insbesondere Leichtmetall bestehen. Möglich und bevorzugt sind Aluminium, Magnesium und Titan und dergleichen mehr, sowie Legierungen aus den angeführten Werkstoffen.

Die Zugstange besteht insbesondere aus rostfreiem Stahl, kann aber auch zum Beispiel aus Titan oder einer Titanlegierung bestehen.

In bevorzugten Weiterbildungen umfasst das Spannstück und/oder das Endstück eine Rändelscheibe, um einen festen Sitz an den Ausfallenden zu gewährleisten.

Die Rändelscheibe an dem Spannstück kann insbesondere drehbar gegenüber dem Spannstück angeordnet sein. Das ist sehr vorteilhaft, da damit eine Beschädigung der Ausfallenden des Fahrrads weitgehend vermieden wird. Beim Spannen des Schnellspanners wird so gewährleistet, dass sich die Rändelscheibe nicht auf der Oberfläche des zu spannenden Körpers bewegt und dadurch zu Kratzern und Beschädigungen führt.

Vorzugsweise ist die Rändelscheibe über einen elastischen Ring drehbar angeordnet, z.B. über einen Dichtring oder über einen O-Ring. Der O-Ring kann in einer Nut auf dem Außenumfang des Spannstücks vorgesehen sein, auf den die Rändelscheibe aufgeschoben wird. Die radial innere Durchgangsöffnung der Rändelscheibe klemmt dann auf dem Dichtring, so dass ein Abfallen verhindert wird. Gleichzeitig kann die Rändelscheibe mit dem 0-Ring verdreht werden.

In einer anderen bevorzugten Ausgestaltung weist das Spannstück und/oder das Endstück radial außen einen Hinterstich auf. Im Bereich des Hinterstichs ist der Außendurchmesser des Spannstücks und/oder des Endstücks kleiner als der Innendurchmesser der Rändelscheibe. Weiterhin ist der Innendurchmesser der Rändelscheibe kleiner als der Außendurchmesser des Spannstücks bzw. des Endstücks vor dem Hinterstich, so dass die Rändelscheibe drehbar und verliersicher aufgenommen ist. Vorzugsweise weist die Rändelscheibe eine Anphasung auf.

Der Schnellspanner umfasst vorzugsweise wenigstens eine und insbesondere zwei Schnellspannfedern, die auf der Zugstange vorgesehen sind. Dadurch wird eine Zentrierung des Schnellspanners erleichtert.

Der Hebel ist insbesondere abnehmbar, um ein unbefugtes Entfernen eines mit dem Schnellspanner ausgerüsteten Rades zu erschweren. Zum Abnehmen des Hebels wird die Sicherungseinrichtung entfernt, so dass der Hebel abgezogen werden kann. Zum Schutz vor Verschmutzung etc. kann eine Kappe auf das Spannstück aufgesteckt werden.

Die Erfindung ist weiterhin auf ein Rad mit einer Felge, einer Nabe und einem Schnellspanner zum Befestigen des Rades an einem Rahmen eines Fahrrads ausgerichtet, wobei der Schnellspanner eine sich in axialer Richtung erstreckende Zugstange und ein Endstück an einem ersten Ende der Zugstange, sowie ein Spannstück an dem zweiten Ende der Zugstange und eine Spanneinrichtung zum Spannen des Spannstücks aufweist. Die Spanneinrichtung umfasst einen Hebel zum Aufbringen der Spannkraft und eine Spannhülse mit einem Übertragungsabschnitt zum Übertragen der Spannkraft auf einen Eingriffsabschnitt des Spannstücks. Der Hebel ist gegenüber dem Spannstück in der axialen Richtung der Zugstange beweglich angeordnet und gegen die Vorspannung einer Vorspannfeder in der axialen Richtung der Zugstange nach außen von einer Eingriffsstellung in eine Drehposition bewegbar, in der eine Winkelstellung des Hebels unabhängig von dem Spannungszustand einstellbar ist.

Insbesondere umfasst das Rad eine Scheibenbremse. Der Hebel des Schnellspanners ist vorzugsweise über einen Ringspalt von dem Spannstück thermisch getrennt, so dass der Hebel aus einem Kunststoffmaterial bestehen kann, ohne dass eine Erwärmung des Kunststoffmaterials Auswirkungen auf den Betrieb oder die Klemmkraft hat.

Weitere Vorteile und Ausführungsformen der vorliegenden Erfindung ergeben sich aus den Ausführungsbeispielen, die nun mit Bezug auf die beiliegenden Zeichnungen erläutert werden.

In den Figuren zeigen:
- Fig. 1: einen erfindungsgemäßen Schnellspanner,
- Fig. 2: den Schnitt A-A des Schnellspanners nach Fig. 1,
- Fig. 3a: das Detail B aus Fig. 2 in vergrößerter Darstellung in der Eingriffsstellung,
- Fig. 3b: eine vergrößerte Darstellung des Details B aus Fig. 2 in der Drehposition,
- Fig. 3c: eine vergrößerte Darstellung des Details B aus Fig. 2 in der Drehposition in einer alternativen Ausführungs-form,
- Fig. 4: den Schnitt F-F aus Fig. 3a in vergrößerter Darstellung im Schnitt,
- Fig. 5: das Detail C aus Fig. 2 in vergrößerter Darstellung,
- Fig. 6: eine stark schematische Ansicht der Rändelscheibe, und
- Fig. 7: eine Ausführungsform mit einer alternativen Befestigung der Rändelscheibe, und
- Fig. 8: ein erfindungsgemäßes Rad in einer schematischen Ansicht.

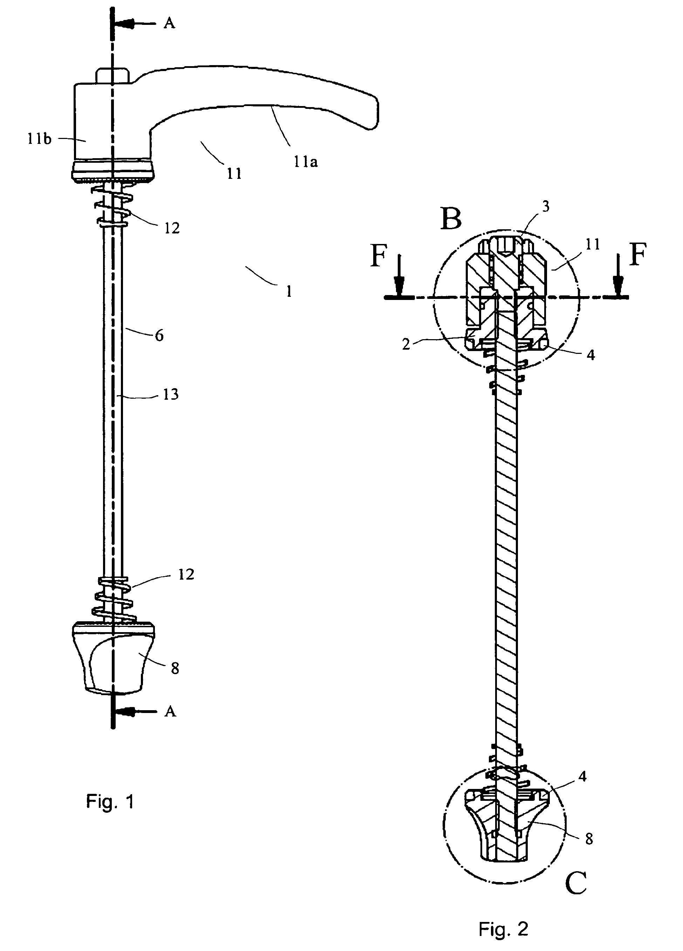

Mit Bezug auf die Figuren 1 bis 7 wird nun ein Ausführungsbeispiel des erfindungsgemäßen Schnellspanners 1 erläutert.

Der Schnellspanner 1 dient dazu, Laufräder von Fahrrädern ohne Werkzeug schnell und einfach mit einer genügenden Klemmkraft an einem Rahmen bzw. in der Gabel montieren zu können.

Der Schnellspanner 1 umfasst eine Spanneinrichtung 11, um die Klemmkraft aufzubringen, eine Zugstange 6, die sich im Betrieb durch die Achse des Rades erstreckt und ein Endstück in Form einer Schnellspannmutter 8.

Die Spanneinrichtung 11 weist einen Spannhebel 11a und eine einstückig damit verbundene Spannhülse 11b auf. Die Spannhülse 11b weist eine Innenverzahnung 11c auf, die im Ruhezustand im Eingriff mit der Außenverzahnung 2b des Spannstücks 2 steht. An dem Kopf 3a einer Sicherungsschraube 3 stützt sich ein Ende einer als Spiralfeder ausgeführten Vorspannfeder 5 ab. Das andere Ende stützt sich gegen einen radial nach innen erstreckenden Absatz 11d der Spannhülse 11b. Die Spiralfeder 5 belastet die in Richtung der zentralen Achse 13 der Schubstange 6 verschiebbare Spannhülse 11b in Richtung auf das Spannstück 2 vor.

Gegen die Kraft der Vorspannfeder 5 kann der Spannhebel 11a in der axialen Richtung der Zugstange 6 nach außen gezogen werden. Dabei gerät die Innenverzahnung 11c außer Eingriff mit einer Außenverzahnung 2b des Spannstücks, die sich über einen axialen Längenabschnitt 2c erstreckt. Die axiale Innenverzahnung 11c erstreckt sich in der Spannhülse 11b über einen im Wesentlichen gleich langen Längenabschnitt am Ende der zylindrischen Öffnung.

Die Klemmkraft des Schnellspanners 1 ist unabhängig von der Spannkraft der Vorspannfeder 5. Um die Klemmkraft des Schnellspanners 1 zu erhöhen, wird mittels einer Drehbewegung das Spannstück 2 gedreht und mit dem Innengewinde 2a weiter auf die mit einem Außengewinde 6a versehene Zugstange 6 aufgeschraubt.

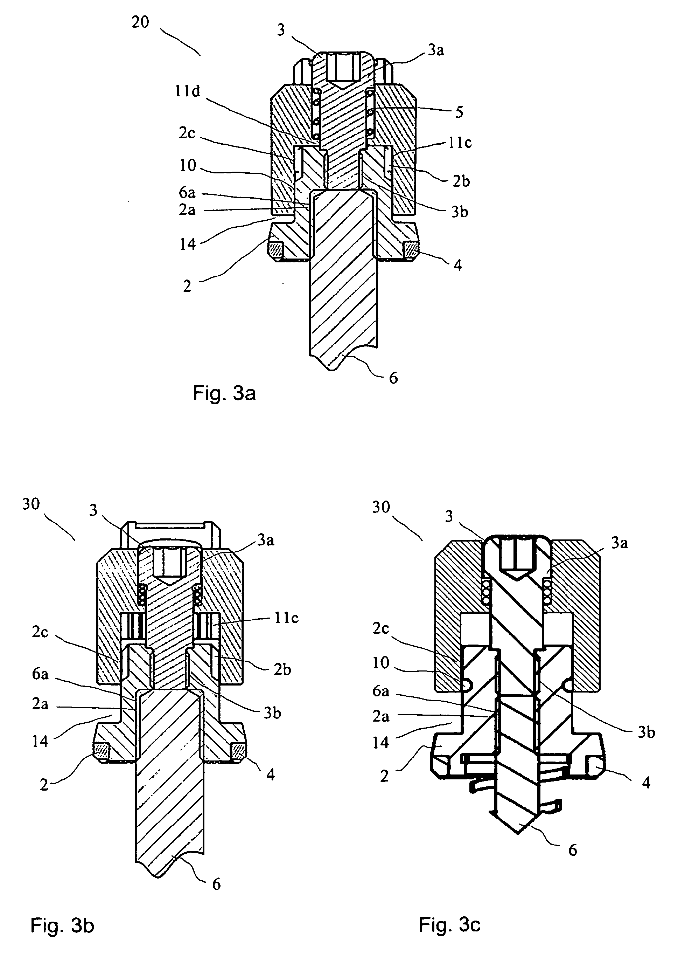

In der Fig. 3a ist das Detail B aus Fig. 2 vergrößert dargestellt. In der in Fig. 3a gezeigten Stellung befinden sich der Hebel 11a und das Spannstück 11b in der Eingriffsposition 20. In dieser Stellung kann durch Drehung des Spannstücks 11b die Spannkraft - je nach Drehrichtung - vergrößert oder verringert werden.

In der Figur 3b ist das Detail B in der Drehposition 30 dargestellt, in welcher der Hebel 11a frei in eine beliebige Position gedreht werden kann.

In der Ausführungsform nach Fig. 3c erstreckt sich die Außenverzahnung 2b über einen axialen Längenabschnitt 2c bis zu einer Nut, in der in dieser Ausführungsform ein 0-Ring 10 angeordnet ist. Die axiale Innenverzahnung 11c erstreckt sich wiederum über einen im Wesentlichen gleich langen Längenabschnitt am Ende der zylindrischen Öffnung in der Spannhülse 11b. Der O-Ring 10 hält in dieser Ausführungsform Schmutz von den Verzahnungen 2b/11c ab, um einen besonders zuverlässigen Betrieb zu gewährleisten.

Nach der Einstellung der Klemmkraft kann der Spannhebel 11a in beide Richtungen der Achse 13 von dem Spannstück 2 weggezogen werden, so dass die Innenverzahnung 11c außer Eingriff mit der Außenverzahnung 2b gerät. Der Spannhebel 11a kann in eine Richtung frei verdreht und in die gewünschte Winkelposition verbracht werden. Nach dem Loslassen wird der Spannhebel 11a mit der Spannhülse 11b durch die Vorspannkraft der Vorspannfeder 5 axial in Richtung der Achse 13 bewegt. Die Außenverzahnung 2b gerät wieder in Eingriff mit der Innenverzahnung 11c und die Winkelposition des Spannhebels ist fixiert.

Die Positionierung des Spannhebels 11a kann in einem Schritt mit dem Spannen bzw. Nachspannen erfolgen und beeinflusst den Sitz des Rades nicht. Das ist vorteilhaft gegenüber dem aus dem Stand der Technik bekannten System mit einem Exzenter.

Bei den gebräuchlichen Schnellspannsystemen wird die Klemmkraft, nach Voreinstellung der Klemmlänge via Mutter/Anschlag auf einem Gewinde, durch das Umlegen eines Exzenters aufgebaut. Dort muss zuerst die Klemmlänge eingestellt werden. Das erfolgt in der Regel iterativ, bis beim Umlegen des Exzenters die aufgebrachte Spannkraft der angestrebten Klemmkraft entspricht. Um den Exzenter dann wieder in die gewünschte Winkelposition zu bringen, muss der Exzenter wieder umgelegt - d.h. das Laufrad gelöst - werden. Dieser Mehraufwand ist vor allem dann mühsam und zeitraubend, wenn der Fahrer die Klemmkraft während der Fahrt (z. Bsp. vor einer Abfahrt) überprüfen will - was durchaus üblich ist.

Bei dem aus dem Stand der Technik bekannten System muss das Laufrad gelöst werden - dadurch kann sich die Einbausituation für die Bremsen (Felgen- und Scheibenbremsen) und der Gangschaltung ändern. Danach muss der Exzenter wieder umgelegt werden. Ist der Klemmabstand zu gering, muss die Klemmlänge korrigiert werden, d.h. das Laufrad muss wieder gelöst werden.

Beim erfindungsgemäßen System muss nur die Klemmkraft überprüft werden. Dabei lässt sich der Schnellspannhebel bzw.

Spannhebel 11a gleichzeitig nachziehen, ohne den Schnellspanner zu lösen. Falls die Klemmkraft - wider Erwarten - zu gering ist, erfolgt mit der Kontrolle auch gleich die Korrektur.

Ein Vorteil des neuen Schnellspanners 1 ist auch, dass wenig Bauteile und vorzugsweise ausschließlich metallene Bauteile die Klemmkraft aufbauen und aufrecht erhalten. Die Klemmkraft wird so durch äußere Bedingungen (Zeit, Temperatur) kaum beeinflusst, anders als bei Lösungen, wo Kunststoffteile im Kraftfluss vorkommen, die aber dort nötig sind, um zum Beispiel die Reibkraft beim Umlegen des Exzenters zu minimieren.

Der Faktor Zeit kann bei konventionellen Schnellspannern dazu führen, dass sich im Kraftfluss befindliche Kunststoffteile setzen, d.h. eine eigentliche Veränderung der Klemmlänge und dadurch der Klemmkraft verursachen was im schlimmsten Fall zum Versagen des Systems führen kann.

Beim neuen System wird die Klemmkraft durch das Festziehen des Spannhebels 11a mit dem Endstück bzw. der Schnellspannmutter 8 aufgebaut.

Der Spannhebel 11a und die Spannhülse 11b bestehen hier vorzugsweise aus faserverstärktem Kunststoff. In der Spannhülse 11b ist auf dem Innenumfang eine axiale Innenverzahnung 11c vorgesehen, die durch eine axial wirkende Vorspannfeder 5 kraftschlüssig in Richtung auf das Spannstück 2 zu gedrückt wird, wobei die Innenverzahnung 11c der Spannhülse 11b in formschlüssigen Eingriff mit einer Außenverzahnung 2b des Spannstücks 2 gerät. Das Spannstück 2 weist ein Innengewinde 2a zum Verschrauben mit einem Außengewinde 6a der Zugstange 2 auf.

Zwischen der Spannhülse 11b und dem Spannstück 2 ist ein Luftspalt bzw. ein Ringspalt 14 vorgesehen, der eine thermische Entkopplung der Komponenten bewirkt. Gleichzeitig sorgt die durch den Ringspalt strömende Luft für eine Kühlung der Komponenten.

Wenn die Druckkraft der Vorspannfeder 5 manuell überwunden wird, erlaubt es der axiale Hub des Schnellspannhebels 11a, dass der Winkel des Hebels 11a der Einbausituation oder dem Geschmack des Fahrers entsprechend eingestellt werden kann. Ist die Einstellung erfolgt, wird der Schnellspannhebel 11a losgelassen und die Vorspannfeder 5 arretiert den Schnellspannhebel 11a wieder.

Die Rändelscheibe 4 ist gegenüber dem Spannstück 2 drehbar angeordnet, damit sich die Rändelscheibe 4 nicht in den Rahmen bzw. die Gabel einfrisst.

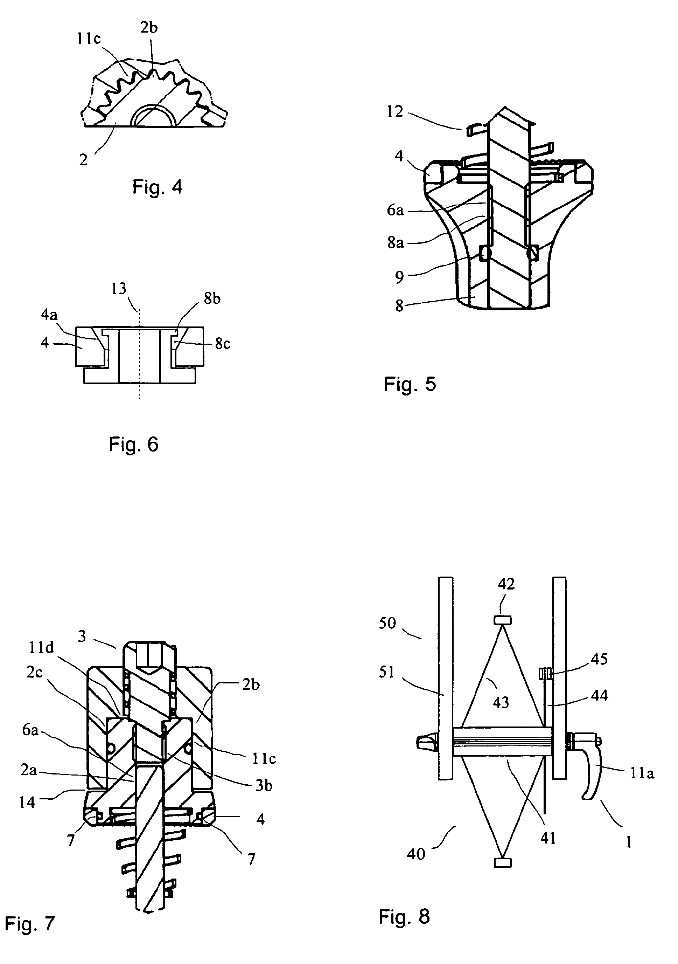

In der Ausführung nach Fig. 6 wird die Drehbarkeit der Rändelscheibe 4 durch einen Außendurchmesser des Spannstücks 2 im Bereich eines Hinterstichs 8c gewährleistet, der kleiner ist als der Innendurchmesser der Rändelscheibe 4. Gleichzeitig ist der Innendurchmesser der Rändelscheibe kleiner als der Außendurchmesser 8b des Spannstücks 2 bzw. des Endstücks 8 vor dem Hinterstich 8a, so dass die Rändelscheibe 4 verliersicher aufgenommen ist. Die Differenz der Durchmesser erlaubt die Montage unter Aufbringung einer entsprechenden Anpresskraft. Zur Erleichterung der Montage ist an der Rändelscheibe 4 eine Anphasung 4a vorgesehen.

Bei der in Fig. 7 dargestellten Variante ist ein O-Ring 7 auf dem Spannstück 2 bzw. dem Endstück 8 vorgesehen, der die Rändelscheibe 4 drehbeweglich aufnimmt und axial fixiert, so dass sie beim Ausbauen des Schnellspanners nicht verloren geht.

Bei allen Ausgestaltungen sind Schnellspannfedern 12 vorgesehen, die den Einbau des Laufrades erleichtern, da sie die Schnellspanneinheit zentrieren.

Der 0-Ring 9 in der Nut der Schnellspannmutter bzw. des Endstücks 8 (vgl. Fig. 5) führt zu einer konstanten Klemmkraft zwischen der Zugstange 6 und der Schnellspannmutter. Auch dies erleichtert den Einbau und verhindert ein Verlieren der Schnellspannmutter, wenn das Laufrad nicht eingebaut ist, d.h. wenn keine Klemmkraft auf den Schnellspanner wirkt.

Heute bekannte Lösungen weisen anstelle des O-Rings 9 einen Kunststoffeinsatz auf. Die Klemmkraft dieses Einsatzes nimmt jedoch bei jeder Manipulation und zunehmendem Alter ab, da sich ein Gewinde einschneidet.

Eine erhebliche Verbesserung ist, dass die Bedienung des neuen Systems denkbar einfach ist. Gefährliche Fehlbedienungen, wie sie bei anderen Systemen oft zu sehen sind, können zu einem großen Teil verhindert werden, da das neue System für die meisten Anwender verständlicher ist, als das Aufbauen der Klemmkraft durch Variieren der Klemmlänge und anschließendem Umlegen eines Exzenters.

Die Montage eines Laufrades mit dem neuen System ist denkbar einfach. Festziehen (wenn es durch die Einbausituation nicht möglich ist, den Hebel 360° zu drehen, kann dies auch wie mit einer Ratsche geschehen). Anschließend wird der Hebel 11a nach außen gezogen, in die gewünschte Position gedreht und wieder losgelassen.

Durch Entfernen der Schraube 3 kann der Hebel 11 entfernt werden. Dann ist ein unbefugtes Entfernen der Laufräder erheblich erschwert. Das ist ein Vorteil gegenüber herkömmlichen Systemen. Nach dem Entfernen des Hebels kann eine Schutzkappe aufgebracht werden, um das Spannstück abzudecken.

In Fig. 8 ist in stark schematischer Form ein erfindungsgemäßes Rad 40 eines erfindungsgemäßen Fahrrads 50 dargestellt, welches über zwei Räder und einen Rahmen verfügt.

Das Rad 40 weist eine Nabe 41 und eine Felge 42 auf, die über Speichen 43 mit der Nabe 41 verbunden ist. An dem Rahmen 51 oder einer Gabel des Fahrrads 50 ist das Rad 40 mittels eines erfindungsgemäßen Schnellspanners 1 befestigt, wie er zuvor beschrieben wurde.

Hier im Ausführungsbeispiel ist das Rad 40 mit einer Scheibenbremse 44 ausgerüstet, die über Bremsbacken 45 in nicht dargestellter Weise aktiviert wird. Der Hebel 11a des Schnellspanners 1 besteht aus Kunststoff, während die zur Klemmung dienenden Teile des Schnellspanners 1 aus Metall bestehen. Da ein Ringspalt 14 zwischen der Spannhülse 11b und dem Spannstück 2 besteht, wird der Hebel 11a thermisch entkoppelt und zusätzlich durch den durchtretenden Luftstrom gekühlt. Das ist hier vorteilhaft, da beim Bremsen erhebliche Wärmeströme an der Scheibenbremse 44 entstehen, die sich so nicht negativ auf den Betrieb oder die Bedienung des Schnellspanners auswirken.

## Patentansprüche

1. Schnellspanner (1), insbesondere für Fahrräder,
mit einer sich in axialer Richtung erstreckenden Zugstange (6), einem Endstück (8), an einem ersten Ende der Zugstange, einem Spannstück (2) an dem zweiten Ende der Zugstange und mit einer Spanneinrichtung (11) zum Spannen des Spannstücks,
wobei die Spanneinrichtung (11) einen Hebel (11a) zum Aufbringen der Spannkraft und eine Spannhülse mit einem Ubertragungsabschnitt (11c) zum Übertragen der Spannkraft auf einen Eingriffsabschnitt (2b) des Spannstücks (2) umfasst,
**dadurch gekennzeichet dass** der Hebel (11a) gegenüber dem Spannstück (2) in der axialen Richtung der Zugstange (6) beweglich angeordnet ist und gegen die Vorspannung einer Vorspannfeder (5) in der axialen Richtung der Zugstange (6) nach außen von einer Eingriffsstellung (20) in eine Drehposition (30) bewegbar ist, in der eine Winkelstellung des Hebels unabhängig von dem Spannungszustand einstellbar ist.

2. Schnellspanner nach Anspruch 1, wobei der Eingriffsabschnitt als Innenverzahnung ausgeführt ist und/oder der Übertragungsabschnitt als Außenverzahnung ausgeführt ist.

3. Schnellspanner nach mindestens einem der vorhergehenden Ansprüche, wobei die Klemmkraft unabhängig von der Vorspannfeder ist.

4. Schnellspanner nach mindestens einem der vorhergehenden Ansprüche, wobei das Spannstück ein Innengewinde aufweist, welches mit einem Außengewinde der Zugstange zusammenwirkt.

5. Schnellspanner nach mindestens einem der vorhergehenden Ansprüche, wobei das Endstück ein Innengewinde aufweist, welches mit einem Außengewinde der Zugstange zusammenwirkt.

6. Schnellspanner nach mindestens einem der vorhergehenden Ansprüche, wobei die Spanneinrichtung ein Sicherungseinrichtung umfasst, um die Spannhülse an dem Spannstück in der axialen Richtung bewegbar und verliersicher aufzunehmen, wobei die Sicherungseinrichtung insbesondere ein Außengewinde aufweist, welches mit einem Innengewinde des Spannstücks zusammenwirkt.

7. Schnellspanner nach mindestens einem der vorhergehenden Ansprüche, wobei zwischen der Sicherungseinrichtung und dem Endstück die Vorspannfeder aufgenommen ist.

8. Schnellspanner nach mindestens einem der vorhergehenden Ansprüche, wobei zwischen dem Eingriffsabschnitt der Spanneinrichtung und dem Spannstück ein axialer Ringspalt vorgesehen ist.

9. Schnellspanner nach mindestens einem der vorhergehenden Ansprüche, wobei der Hebel wenigstens teilweise aus einem Kunststoff und insbesondere wenigstens teilweise aus einem Faserverbundwerkstoff besteht.

10. Schnellspanner nach mindestens einem der vorhergehenden Ansprüche, wobei wenigstens eine Schnellspannfeder vorgesehen ist.

11. Schnellspanner nach mindestens einem der vorhergehenden Ansprüche, wobei das Spannstück eine Rändelscheibe umfasst, wobei die vorzugsweise Rändelscheibe drehbar und verliersicher angeordnet ist.

12. Schnellspanner nach dem vorhergehenden Anspruch, wobei die Rändelscheibe über einen Dichtring drehbar angeordnet ist.

13. Schnellspanner nach mindestens einem der vorhergehenden Ansprüche, wobei ein Außendurchmesser im Bereich eines Hinterstichs des Spannstücks und/oder des Endstücks kleiner ist als der Innendurchmesser der Rändelscheibe, und wobei der Innendurchmesser der Rändelscheibe kleiner ist als der Außendurchmesser des Spannstücks bzw. des Endstücks vor dem Hinterstich, so dass die Rändelscheibe drehbar und verliersicher aufgenommen ist, wobei die Rändelscheibe eine Anphasung aufweist.

14. Schnellspanner nach mindestens einem der vorhergehenden Ansprüche, wobei der Hebel nach Entfernen der Sicherungseinrichtung entfernbar ist, um ein unbefugtes Entfernen eine Rades zu erschweren.

15. Rad (40) mit einer Felge (42), und einer Nabe (41), wobei ein Schnellspanner (1) vorgesehen ist, um das Rad (40) an einem Fahrrad zu befestigen, wobei der Schnellspanner eine sich in axialer Richtung erstreckende Zugstange und ein Endstück an einem ersten Ende der Zugstange, sowie ein Spannstück an dem zweiten Ende der Zugstange und eine Spanneinrichtung zum Spannen des Spannstücks aufweist,
wobei die Spanneinrichtung einen Hebel zum Aufbringen der Spannkraft und eine Spannhülse mit einem Übertragungsabschnitt zum Übertragen der Spannkraft auf einen Eingriffsabschnitt des Spannstücks umfasst,
wobei der Hebel gegenüber dem Spannstück in der axialen Richtung der Zugstange beweglich angeordnet ist und gegen die Vorspannung einer Vorspannfeder in der axialen Richtung der Zugstange nach außen von einer Eingriffsstellung in eine Drehposition bewegbar ist, in der eine Winkelstellung des Hebels unabhängig von dem Spannungszustand einstellbar ist.

16. Rad nach dem vorhergehenden Anspruch, **gekennzeichnet durch** eine Scheibenbremse (44).

## Claims

1. A quick release (1), in particular for bicycles,
comprising a pull rod (6) extending in the axial direction, an end element (8) at a first end of the pull rod, a clamping element (2) at the second end of the pull rod, and a tensioning device (11) for tensioning the clamping element,
wherein the tensioning device (11) comprises a lever (11a) for applying the clamping force and a tensioning sleeve (11b) with a transmitter portion (11c) for transmitting the clamping force to an engaging portion (2b) of the clamping element (2),
**characterized in that** the lever (11a) is positioned to be movable relative to the clamping element (2) in the axial direction of the pull rod (6) and is movable against the biasing force of a biasing spring (5) outwardly in the axial direction of the pull rod (6) from an engaged position (20) to a turn position (30) in which an angular position of the lever can be set independently of the state of tensioning.

2. The quick release according to claim 1 wherein the engaging portion is configured as an internal toothing and/or the transmitter portion is configured as an external toothing.

3. The quick release according to at least one of the preceding claims wherein the clamping force is independent of the biasing spring.

4. The quick release according to at least one of the preceding claims wherein the clamping element comprises an internal thread interacting with an external thread of the pull rod.

5. The quick release according to at least one of the preceding claims wherein the end element comprises an internal thread interacting with an external thread of the pull rod.

6. The quick release according to at least one of the preceding claims wherein the tensioning device comprises a safety device to support the tensioning sleeve on the clamping element to be axially movable and secure against loss, wherein the safety device in particular comprises an external thread interacting with an internal thread of the clamping element.

7. The quick release according to at least one of the preceding claims wherein the biasing spring is supported between the safety device and the end element.

8. The quick release according to at least one of the preceding claims wherein an axial annular gap is provided between the engaging portion of the tensioning device and the clamping element.

9. The quick release according to at least one of the preceding claims wherein the lever is at least partially made of plastic and in particular at least partially made of a fibrous composite material.

10. The quick release according to at least one of the preceding claims wherein at least one tensioning spring is provided.

11. The quick release according to at least one of the preceding claims wherein the clamping element comprises a knurled wheel wherein the preferably knurled wheel is positioned to be rotatable and secure against loss.

12. The quick release according to the preceding claim wherein the knurled wheel is positioned to be rotatable by way of a sealing ring.

13. The quick release according to at least one of the preceding claims wherein an outer diameter in the region of an undercut of the clamping element and/or the end element is smaller than the inner diameter of the knurled wheel, and wherein the inner diameter of the knurled wheel is smaller than the outer diameter of the clamping element or the end element before the undercut such that the knurled wheel is supported to be rotatable and secure against loss, wherein the knurled wheel comprises a chamfered edge.

14. The quick release according to at least one of the preceding claims wherein the lever is removable after removing the safety device to inhibit illicit removal of a wheel.

15. A wheel (40) having a rim (42) and a hub (41) wherein a quick release (1) is provided for mounting the wheel (40) to a bicycle wherein the quick release comprises a pull rod extending in the axial direction and an end element at a first end of the pull rod, and a clamping element at the second end of the pull rod and a tensioning device for tensioning the clamping element,
wherein the tensioning device comprises a lever for applying the clamping force and a tensioning sleeve with a transmitter portion for transmitting the clamping force to an engaging portion of the clamping element,
wherein the lever is positioned to be movable relative to the clamping element in the axial direction of the pull rod and against the biasing force of a biasing spring is movable outwardly in the axial direction of the pull rod from an engaged position to a turn position in which the angular position of the lever can be set independently of the state of tensioning.

16. The wheel according to the preceding claim, **characterized by** a disk brake (44).

## Revendications

1. Dispositif de blocage rapide (1), en particulier pour bicyclettes,
Avec une tige de traction (6) de direction axiale, un embout (8) à une première extrémité de la tige de traction, un tendeur (2) à la deuxième extrémité de la tige de traction et avec un dispositif de serrage (11) pour serrer le tendeur,
le dispositif de serrage (11) comprenant un levier (11a) pour appliquer la force de tension ainsi qu'un manchon de serrage (11b) pourvu d'une section de transmission (11c) pour transmettre la force de tension à une section d'engagement (2b) du tendeur (2),
**Caractérisé en ce que** le levier (11a) est disposé de telle sorte à être mobile par rapport au tendeur (2) dans le sens axial de la tige de traction (6) et qu'il peut être déplacé contre la pré-tension d'un ressort de pré-tension (5) dans le sens axial de la tige de traction (6) vers l'extérieur pour passer d'une position d'engagement (20) à une position de rotation (30), dans laquelle il est possible de régler une position angulaire du levier indépendamment de l'état de tension.

2. Dispositif de blocage rapide selon la revendication 1, la section d'engagement étant réalisée sous forme de denture intérieure et/ou la section de transmission étant réalisée sous forme de denture extérieure.

3. Dispositif de blocage rapide selon au moins l'une quelconque des revendications précédentes, la force de serrage étant indépendante du ressort de pré-tension.

4. Dispositif de blocage rapide selon au moins l'une quelconque des revendications précédentes, le tendeur présentant un filetage intérieur entrant en interaction avec le filetage extérieur de la tige de traction.

5. Dispositif de blocage rapide selon au moins l'une quelconque des revendications précédentes, l'embout présentant un filetage intérieur entrant en interaction avec le filetage extérieur de la tige de traction.

6. Dispositif de blocage rapide selon au moins l'une quelconque des revendications précédentes, le dispositif de serrage comprenant un dispositif de sécurité qui permet de déplacer le manchon de serrage au niveau du tendeur dans le sens axial sans risquer de le perdre, et le dispositif de sécurité présentant en particulier un filetage extérieur qui entre en interaction avec un filetage intérieur du tendeur.

7. Dispositif de blocage rapide selon au moins l'une quelconque des revendications précédentes, le ressort de pré-tension étant situé entre le dispositif de sécurité et l'embout.

8. Dispositif de blocage rapide selon au moins l'une quelconque des revendications précédentes, un interstice annulaire axial étant prévu entre la section d'engagement du dispositif de serrage et l'embout.

9. Dispositif de blocage rapide selon au moins l'une quelconque des revendications précédentes, le levier étant composé au moins en partie d'une matière plastique et au moins en partie en particulier d'un matériau composite à fibres.

10. Dispositif de blocage rapide selon au moins l'une quelconque des revendications précédentes, pour lequel est prévu au moins un ressort de blocage rapide.

11. Dispositif de blocage rapide selon au moins l'une quelconque des revendications précédentes, le tendeur comprenant une molette, la molette de préférence étant rotative et fixée de telle sorte à ne pouvoir être perdue.

12. Dispositif de blocage rapide selon la revendication précédente, la molette étant disposée au-dessus d'une rondelle d'étanchéité de telle sorte à être rotative.

13. Dispositif de blocage rapide selon au moins l'une quelconque des revendications précédentes, un diamètre extérieur étant, au niveau d'une dépouille du tendeur et/ou de l'embout, inférieur au diamètre intérieur de la molette, et le diamètre intérieur de la molette étant inférieur au diamètre extérieur du tendeur ou, le cas échéant, de l'embout devant la dépouille, de telle façon que la molette soit rotative et ne puisse pas être perdue, la molette présentant un chanfreinage.

14. Dispositif de blocage rapide selon au moins l'une quelconque des revendications précédentes, le levier pouvant être enlevé une fois que le dispositif de sécurité aura été enlevé, pour empêcher qu'une roue ne soit retirée sans autorisation.

15. Roue (40) pourvue d'une jante (42) et d'un moyeu (41), un dispositif de blocage rapide (1) étant prévu pour fixer la roue (40) à une bicyclette, le dispositif de blocage rapide présentant une tige de traction de direction axiale et un embout à une première extrémité de la tige de traction, ainsi qu'un tendeur à la deuxième extrémité de la tige de traction et un dispositif de serrage pour tendre le tendeur,
Le dispositif de serrage comprenant un levier pour appliquer la force de tension et un manchon de serrage avec une section de transmission pour transmettre la force de tension sur une section d'engagement du tendeur,
Le levier étant mobile par rapport au tendeur dans le sens axial de la tige de traction et pouvant être déplacé contre la pré-tension d'un ressort de pré-tension dans le sens axial de la tige de traction vers l'extérieur pour passer d'une position d'engagement à une position de rotation, dans laquelle il est possible de régler une position angulaire du levier indépendamment de l'état de tension.

16. Roue selon la revendication précédente, **caractérisée par** un frein à disques (44).
